Europäisches Patentamt

European Patent Office

Office européen des brevets

(19)

(11) EP 0 997 872 A1

## (12) EUROPEAN PATENT APPLICATION
published in accordance with Art. 158(3) EPC

(43) Date of publication:
03.05.2000 Bulletin 2000/18

(21) Application number: 99919605.8

(22) Date of filing: 14.05.1999

(51) Int. Cl.⁷: **G11B 5/23**, G11B 5/127

(86) International application number:
**PCT/JP99/02536**

(87) International publication number:
**WO 99/59146 (18.11.1999 Gazette 1999/46)**

(84) Designated Contracting States:
DE FR GB

(30) Priority: 14.05.1998 JP 13230198

(71) Applicant: **Sony Corporation**
**Tokyo 141-0001 (JP)**

(72) Inventor: **FUKUDA, Shinichi**
**Shinagawa-ku, Tokyo 141-0001 (JP)**

(74) Representative:
**Thévenet, Jean-Bruno et al**
**Cabinet Beau de Loménie**
**158, rue de l'Université**
**75340 Paris Cédex 07 (FR)**

## (54) MAGNETIC HEAD AND METHOD OF MANUFACTURE

(57)   This invention is directed to a magnetic head device adapted for reading out information signals recorded on a magnetic recording medium such as magnetic tape, etc. where recording of information signals has been carried out on recording tracks adjacent to each other, wherein magnetic core half bodies opposite to each other to form magnetic gap are bonded (joined) in a positionally shifted manner so as to take positional relationship to decrease crosstalk noise which is read out from the adjacent recording track. For this reason, crosstalk noise can be reduced and butting of a pair of magnetic core half bodies is facilitated. Thus, magnetic head device can be easily manufactured.

FIG.8

EP 0 997 872 A1

## Description

Technical Field

This invention relates to a magnetic head device for reproducing information signals recorded with respect to a magnetic recording medium where recording of information signals has been carried out at recording tracks adjacent to each other, and a method of manufacturing such a magnetic head device.

Background Art

Hitherto, there have been used recording and/or reproducing apparatuses (units) of the helical scan system adapted to travel magnetic tape in the state where the magnetic tape is obliquely wound on tape guide drum provided with rotational magnetic heads to allow the rotational magnetic head and the magnetic tape to undergo relative slidable contact to thereby carry out recording of information signals so as to form recording tracks in the state inclined in the length direction of the magnetic tape, and to carry out reproduction of information signals recorded on this recording tape.

In recording and/or reproducing units of this kind, there are used units adapted for recording information signals such as audio signal and/or video signal, etc. without providing guard band between recording tracks adjacent to each other for the purpose of improving recording density of information signal. However, when recording tracks are formed in a manner adjacent to each other without providing guard band to carry out recording of information signals, at the time of reproduction, magnetic head scans a predetermined recording track and scans a portion of recording track adjacent to this recording track. As a result, signal component which is read out from the adjacent recording track results in noise component of information signal which is read out from the primary recording track. Thus, reproduction characteristic is degraded. In order to eliminate such a problem, there have been used recording/reproducing apparatuses (units) employing azimuth recording system in which azimuth angles of the magnetic head for recording information signal with respect to (onto) recording tracks adjacent to each other or for reproducing information signal recorded on recording tracks adjacent to each other are caused to be different, whereby even in the case where when the magnetic head scans a predetermined recording track, a portion of recording tracks adjacent to this recording track is scanned, reduction of signal level which is read out from the adjacent recording track is realized so that satisfactory reproduction characteristic can be obtained.

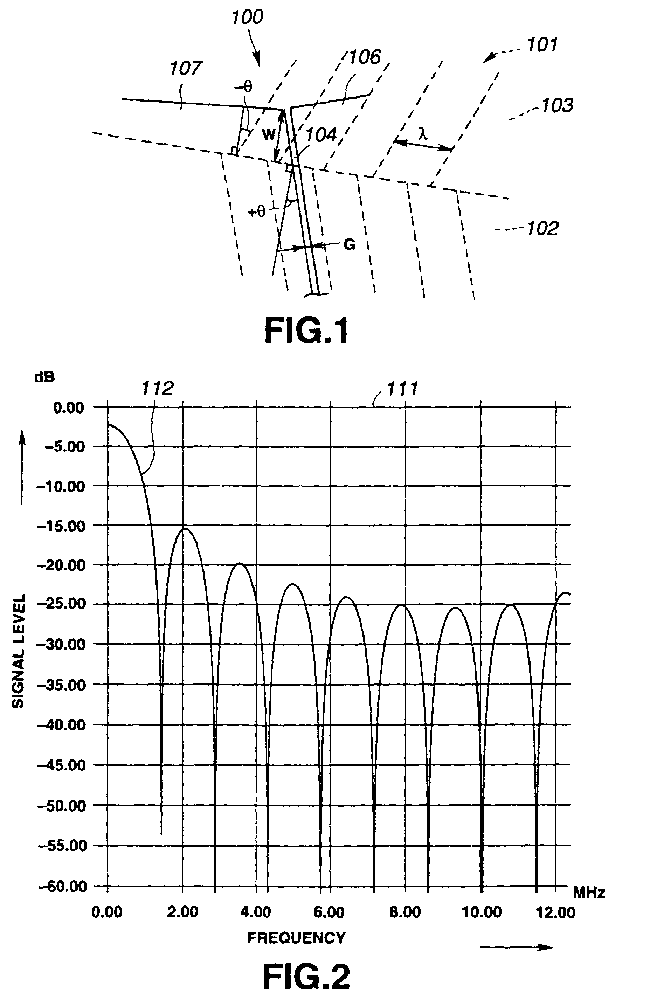

In magnetic tape 101 on which information signals are recorded by the azimuth recording system, as shown in FIG. 1, +(plus) side recording track 102 and -(minus) side recording track 103 formed in an inclined manner with respect to traveling direction of the magnetic tape 101 are alternately formed so that recording patterns thereof are opposite in polarity, i.e., inclination directions of recording patterns are opposite to each other.

Meanwhile, recording and/or reproducing apparatuses (units) employing the azimuth recording system comprise at least one pair of magnetic heads in which azimuth angles in scanning recording tracks adjacent to each other are caused to be different in order to record information signals onto recording tracks 102, 103 adjacent to each other in the state where azimuth angles are caused to be different, or to reproduce information signals recorded on the recording tracks 102, 103 adjacent to each other.

A magnetic head 100 for scanning the + side recording track 102 formed on the magnetic tape 101 shown in FIG. 1 will now be described in a more practical sense. This magnetic head 100 is formed by butt-bonding (joining) a pair of magnetic core half bodies through a magnetic gap 104. This magnetic head 100 is adapted so that azimuth angle which is angle with respect to width direction of recording track of the magnetic tape 101 of the magnetic gap 104 is caused to be $+\theta°$. On the other hand, magnetic head for scanning - side recording track 103 is adapted so that azimuth angle of magnetic gap is set to $-\theta°$ which is opposite to that of the magnetic head 100 (although not shown).

The example in the case of scanning the + side recording track 102 by means of magnetic head 100 to carry out read-out operation of information signals recorded on such recording track 102 will now be described with reference to FIG. 1. The magnetic tape 101 is traveled in one direction and the magnetic head 100 is scanned in one direction. The magnetic head 100 detects magnetic field from the + side recording track 102 of the magnetic tape 101 to thereby carry out read-out operation of information signals recorded on the + side recording track 102. At this time, when gap length of the magnetic gap 104 is G, protruding quantity of overlap portion where the magnetic head 100 and the - side recording track 103 overlap with each other is W, recording wavelength is $\lambda$, and azimuth angle which is inclination (tilt) angle of magnetic gap with respect to track width direction of the magnetic tape 101 is $\theta$, crosstalk noise N which is read out and outputted from - side recording track 103 adjacent to the + side recording track 102 is represented by the following formula.

$$N = \frac{\sin\dfrac{\pi G\cos 2\theta}{\lambda\cos\theta}}{\sin\dfrac{\pi G}{\lambda\cos\theta}} \bullet \frac{\sin\dfrac{2\pi W\tan\theta}{\lambda}}{\dfrac{2\pi W\tan\theta}{\lambda}}$$

Namely, since the first term of the above-mentioned formula indicates all signals which are read out from the - side recording track 103 and the second term indicates azimuth loss, crosstalk noise N which is read out and outputted from the - side recording track 103 is attenuated by azimuth loss from quantity of all signals.

FIG. 2 shows an example of frequency characteristic of crosstalk noise N which is read out and outputted from - (minus) side recording track 103 when azimuth angle θ is 20°, protruding quantity W of the overlap portion is 3 μm, gap length G is 0.2 μm, and scan speed (rate) of magnetic head 100 is 3.14 m/s. Line 111 indicates frequency characteristic when there is no azimuth loss. Line 112 indicates frequency characteristic when there is azimuth loss. It is seen that crosstalk noise N which is read out and outputted from the - side recording tracks 103 is attenuated by azimuth loss because the line 112 is located at the lower side in FIG. 2 from the line 111.

Meanwhile, in order to record information signals onto the magnetic tape 101 at higher density, it is necessary to further reduce pitch of the recording tracks of the magnetic tape 101. When the track pitch is reduced as stated above, the magnetic head 100 is adapted so that read-out quantity of main information signal which is read out from the + side recording track 102 is decreased, and, on one hand, read-out quantity of crosstalk noise N which is read out from the - side recording track 103 is unchanged.

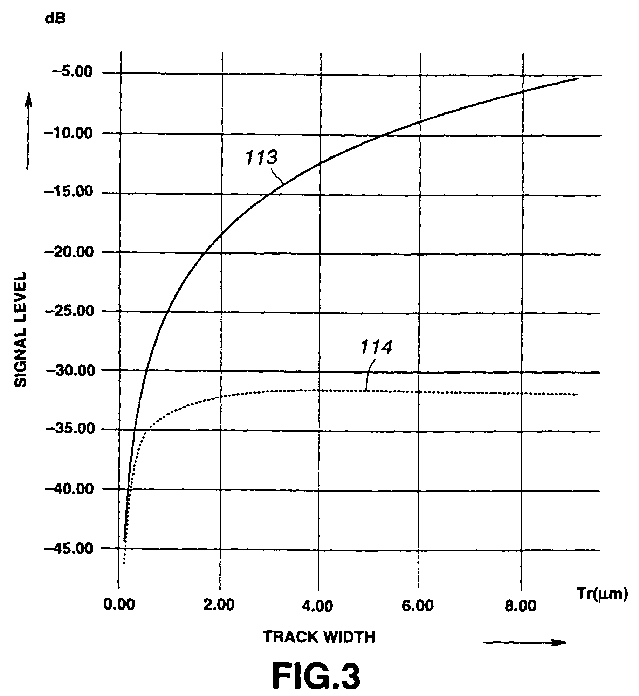

FIG. 3 is a characteristic diagram of signal level with respect to track width Tr of recording tracks formed on the magnetic tape 101. Line 113 indicates signal of normal azimuth that the first magnetic head 100 reads out from the + side recording track 102, and line 114 indicates signal of inverse azimuth, i.e., crosstalk noise N that the overlap portion of the magnetic head 100 reads out from the - side recording track 103. As shown in FIG. 3, line 113 indicating normal azimuth is such that according as track width Tr becomes narrower, the signal level is dropped to more degree, whereas line 114 indicating signal of inverse azimuth is such that signal level is constant at the portion where protruding quantity W of the overlap portion is about 2 μm or more, and the signal of inverse azimuth does not depend upon track width Tr at a predetermined width or more.

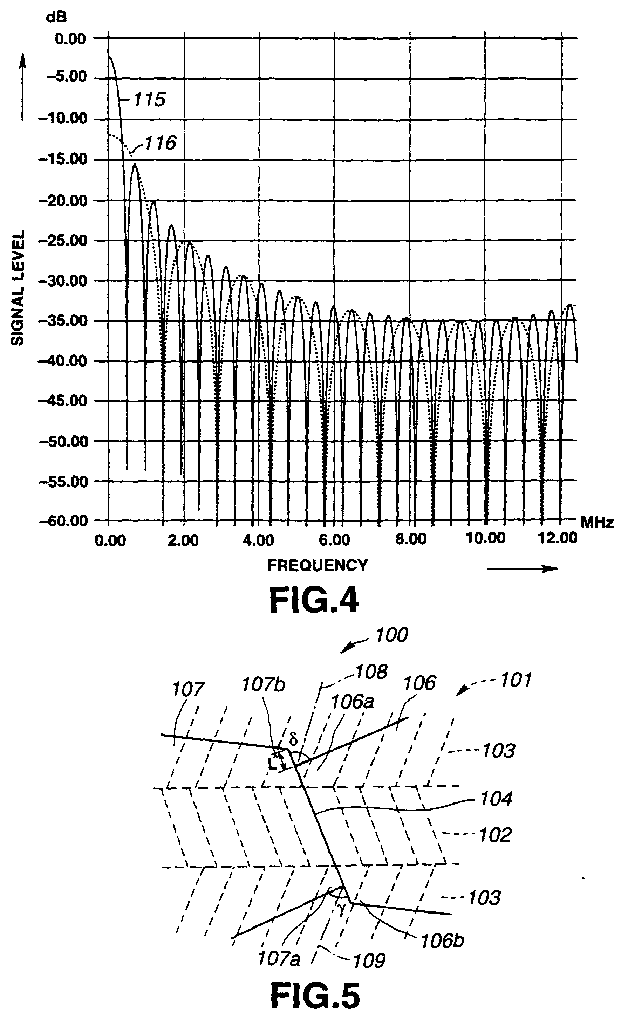

FIG. 4 is a characteristic diagram of signal of inverse azimuth, i.e., crosstalk noise N that overlap portion of the magnetic head 100 when quantities W of protrusion of overlap portion where magnetic head 100 and the - side recording track 103 overlap with respect to frequency of information signal which is read out reads out from the - side recording track 103. Line 115 indicates characteristic diagram when protruding quantity W of overlap portion is 9 μm and line 116 indicates characteristic diagram when protruding quantity W of the overlap portion is 3 μm. It is seen that, as shown in FIG. 4, while the lines 115 and 116 are different in period of frequency, peaks of amplitude are the same, and the crosstalk noise N does not depend upon protruding quantity W.

As stated above, it is seen that when the track width Tr becomes narrower, signal of normal azimuth that the magnetic head 100 reads out from the + side recording track 102 is decreased, whereas crosstalk noise N does not depend upon protruding quantity W of the overlap portion, i.e., track width. In the case where high density of magnetic tape 101 is realized, ratio of crosstalk noise N which is read out from the - (minus) side recording track 103 adjacent to this recording track 102 becomes large with respect to signal which is read out from the + side recording track 102 for carrying out read-out operation of information signal. Thus, it becomes difficult to carry out precise read-out operation of information signals.

Meanwhile, it is desirable that, as described above, the magnetic head 100 is adapted so that a pair of magnetic core half bodies 106, 107 are bonded (joined) in the extending direction of the magnetic gap 104 through the magnetic gap 104 in the state where they are not positionally shifted. However, in the magnetic head 100, as shown in FIG. 5, there are instances where first magnetic core half body 106 and second magnetic core half body 107 are positionally shifted in the extending direction of the magnetic gap 104 because of error in manufacturing in butt-bonding (joining) the pair of magnetic core half bodies 106, 107 so that the other end portion 106b of the first magnetic core half body 106 and the other end portion 107b of the second magnetic core half body 107 may be protruded (projected). In such a case, there are formed pseudo-gaps 108, 109 on intermediate line of angle γ that the other end portion 106b of the first magnetic core half body 106 and one end portion 107a of the second magnetic core half body 107 form and on intermediate line of angle δ that the other end portion 107b of the second magnetic core half body 107 and one end portion 106a of the first magnetic core half body 106 form. At this time, the pseudo-gaps 108, 109 are formed in the state inclined substantially in the same direction as that of recording pattern recorded with a predetermined azimuth angle of the -(minus) side recording track 103. In such a case, the azimuth loss becomes small because inclination (tilting) direction of the pseudo-gaps 108, 109 and inclination direction of recording pattern of one side recording track 103 are substantially the same, thus failing to attenuate crosstalk noise N to much degree. As described above, in the case where high density of magnetic tape 101 is realized, signal level from the + side recording track 102 is dropped, and, on one hand, crosstalk noise N is not reduced. Thus, it becomes difficult to precisely reproduce information signal.

Moreover, it is still more difficult to bond (join) a pair of magnetic core half bodies 106, 107 without producing positional shift therebetween according as gap width becomes small followed by realization of high density.

It is to be noted that the above-mentioned problems may similarly take place also with respect to magnetic head for scanning -(minus) side recording track 103 (not shown).

Disclosure of the Invention

Thus, an object of this invention is to provide a magnetic head device in which azimuth loss is caused to be large so that crosstalk noise can be reduced, and is to provide a method of manufacturing such a magnetic head device.

A magnetic head device according to this invention is directed to a magnetic head device adapted for carrying out read-out operation of information signals recorded with respect to (on) a magnetic recording medium such as magnetic tape, etc. where recording of information signals has been carried out with respect to (on) recording tracks adjacent to each other, wherein magnetic core half bodies opposite to each other to form magnetic gap are bonded (joined) in the state where they are positionally shifted so as to take positional relationship to decrease crosstalk noise which is read out from the adjacent recording track. In more practical sense, end portion of one magnetic core half body is protruded (projected) toward both ends of the magnetic gap so that a pair of magnetic core half bodies are bonded (joined).

The pair of magnetic core half bodies are bonded (joined) in such a manner that inclination direction of pseudo-gap taking place by positional shift of the magnetic gap is formed in a manner in a direction opposite to recording pattern of recording tracks adjacent to each other formed at the recording medium.

In addition, a method of manufacturing a magnetic head device according to this invention is directed to a method of manufacturing a magnetic head device for carrying out read-out operation of information signals recorded with respect to (on) a magnetic recording medium such as magnetic tape, etc. where recording of information signals has been carried out with respect to (on) recording tracks adjacent to each other, wherein the magnetic bead device is manufactured such that a pair of magnetic core half bodies are butt-bonded (joined) in a manner positionally shifted to each other so as to take positional relationship to decrease crosstalk noise which is read out from the adjacent recording track.

Still further objects of this invention and more practical merits obtained by this invention will become more apparent from the embodiment which will be described below.

Brief Description of the Drawings

FIG. 1 is a view for explaining the relationship between magnetic head and magnetic tape.

FIG. 2 is a characteristic diagram of signal level with respect to frequency of crosstalk noise.

FIG. 3 is a characteristic diagram showing level of signal which is read out with respect to track width of magnetic tape.

FIG. 4 is a characteristic diagram of signal level with respect to frequency of crosstalk noise.

FIG. 5 is a view for explaining the state where magnetic core half bodies constituting conventional reproduction (playback) only magnetic head are positionally shifted.

FIG. 6 is a view for explaining use state of magnetic head according to this invention.

FIG. 7 is a perspective view showing magnetic head according to this invention.

FIG. 8 is a view for explaining the state where magnetic core half bodies constituting the magnetic head are positionally shifted.

FIG. 9 is a characteristic diagram showing the relationship between quantity of positional shift of the magnetic core half body and S/N.

FIG. 10 is a perspective view showing the state where winding grooves and grooves are formed at base (substrate).

FIG. 11 is a perspective view showing the state where metallic magnetic film and gap film are formed on the base (substrate) shown in FIG. 10.

FIG. 12 is a perspective view showing core half body blocks provided in the state where the base (substrate) is bisected.

FIG. 13 is a perspective view showing core block constituted by butt-bonding (joining) core half body blocks.

Best Mode For Carrying Out the Invention

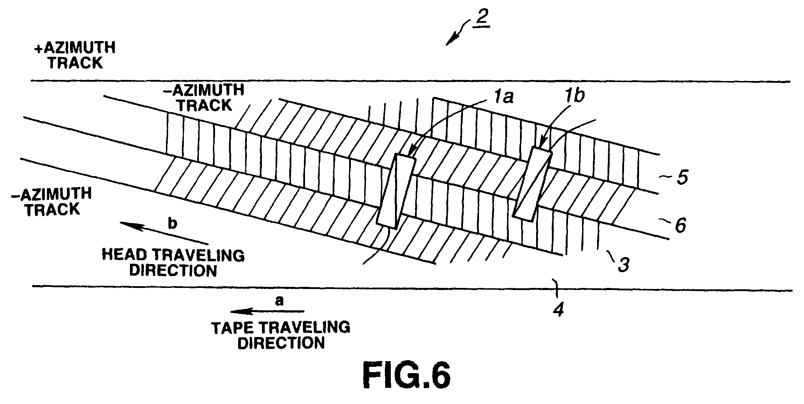

A magnetic head device according to this invention will be described below with reference to the attached drawings. This magnetic head device is used in a rotary magnetic head device having rotary drum on which magnetic tape is obliquely wound. As shown in FIG. 6, this rotary magnetic head device (unit) comprises a pair of recording magnetic head units (not shown) for recording information signals onto a magnetic tape 2, and a pair of reproduction magnetic head units 1a, 1b, to which this invention is applied, for carrying out reproduction of information signals recorded on the magnetic tape 2. Moreover, the rotary magnetic head device includes fixed (stationary) drum and rotary drum, wherein the above-described four magnetic head units are attached at this rotary drum. Such rotary magnetic head device is operated as below. Namely, by allowing the rotary drum to undergo rotational operation to scan the magnetic tape 2 in oblique direction with respect to traveling direction by the four magnetic head units, the rotary magnetic head unit carries out recording of information signal such as audio signal or video signal, etc. so as to form recording tracks at a predetermined azimuth angle, and carries out read-out operation of information signals recorded on the recording tracks.

In the magnetic tape 2 on which information signals are recorded at a predetermined azimuth angle in this way, as shown in FIG. 6, +(plus) side recording tracks 3,5 and -(minus) side recording tracks 4, 6 are alternately provided with their recording patterns being reversed in polarity at the predetermined azimuth angle with respect to the traveling direction of the magnetic tape 2. Namely, the + side recording tracks 3, 5 and the - side recording tracks 4, 6 are formed so that inclination directions of the recording patterns are opposite to each other. Further, the + side recording tracks 3, 5 are scanned by the first magnetic head unit 1a for reproduction so that read-out operation of information signals is carried out, and the - side recording tracks 4, 6 are scanned by the second magnetic head unit 1b for reproduction so that read-out operation of information signals is carried out. The first and second magnetic head units 1a, 1b for reproduction are formed so as to become broader than width of recording track formed on the magnetic tape 2 thus to carry out read-out operation of information signals recorded on the recording tracks. In this example, the first and second magnetic head units 1a, 1b for reproduction carry out, in addition to read-out operation of information signals, read-out operation of tracking signals of a predetermined frequency at overlap portion where magnetic head position portions extending over recording track for carrying out read-out operation and recording track adjacent thereto overlap with each other.

Detailed explanation will be given below by taking an example of first magnetic head unit 1a for carrying out read-out operation of information signals recorded on the + side recording tracks 3, 5.

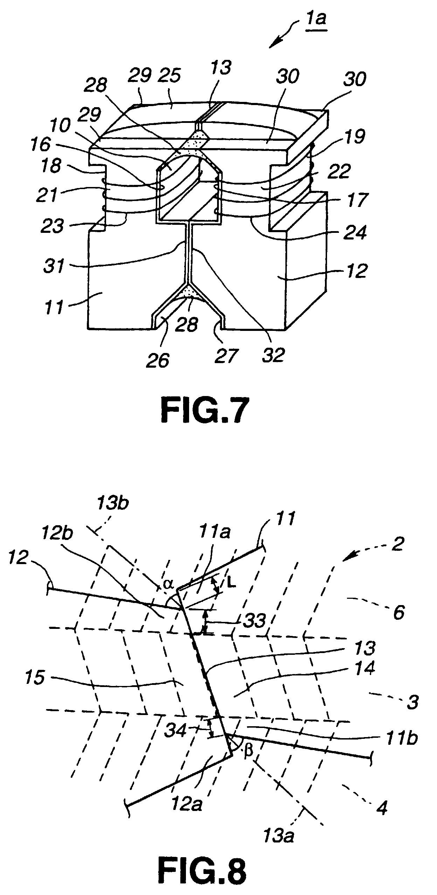

The magnetic head unit 1a for carrying out read-out operation of information signals recorded on the magnetic tape 2 where information signals have been recorded at a predetermined azimuth angle includes, as shown in FIG. 7, a pair of first and second magnetic core half bodies 11, 12, wherein these magnetic core half bodies 11, 12 are butt-bonded (joined) and a magnetic gap 13 is formed at the bonding (joining) portion of the first and second magnetic core half bodies 11, 12.

The first and second magnetic core half bodies 11, 12 consist of magnetic material such as Mn-Zn ferrite, Ni ferrite, etc., and are formed in a manner substantially channel shaped in cross section as a whole so that an opening portion 10 is formed substantially at the central portion when they are buff-bonded (joined). In the first and second magnetic core half bodies 11, 12, at the butting surface sides opposite to each other, there are formed winding grooves 16, 17 which prescribe depth of the magnetic gap 13 and with which coils are respectively engaged. Moreover, at the respective magnetic core half bodies 11, 12, auxiliary wiring grooves 18, 19 cut so as to take concave (channel) shape are formed at the side surfaces of the external sides opposite to the winding grooves 16, 17. At the first and second magnetic core half bodies 11, 12, coils 23 and 24 are respectively wound on winding portions 21, 22 constituted by the wiring grooves 16, 17 and the auxiliary winding grooves 18, 19. Lengths of these winding portions 21, 22 are determined in accordance with the number of windings of the coils 23, 24. In this example, at the slidable contact surface 25 side which is slidably in contact with the magnetic tape of the opening portion 10, bonding agent 28 for reinforcing bonding (joining) strength of the first and second magnetic core half bodies 11, 12 is filled.

Moreover, at the first and second magnetic core half bodies 11, 12, there are provided grooves 26, 27 into which the bonding agent 28 for bonding (joining) these magnetic core half bodies 11, 12 is filled at the back face side opposite to the slidable contact surface 25 slidably in contact with the magnetic tape. Bonding agent 28 such as molten glass, etc., is filled into these grooves 26, 27.

At the slidable contact 25 side of the first and second magnetic core half bodies 11, 12, offsets 29, 29, 30, 30 are provided along the track width direction of the magnetic tape. The offsets 29, 29, 30, 30 are provided at the both sides of the slidable contact surface 25, whereby widths of the slidable contact surface 25 and the magnetic gap 13 are prescribed so as to become in correspondence with track width of the magnetic tape 2. In this example, slidable contact surface 25 slidably in contact with this magnetic tape 2 is formed so as to slightly become broader as compared to widths of the + side recording tracks 3, 5 and bridges over adjacent - side recording tracks 4,6 so that read-out operation of tracking signal can be made.

At the buffing surface of the first and second magnetic core half bodies 11, 12, metallic magnetic films 31, 32 are formed. As the metallic magnetic films 31, 32, ferromagnetic material such as Fe system alloy or Fe-Ni system alloy, etc. is used. Namely, in the magnetic head unit 1a used for reproduction, the first and second magnetic core half bodies 11, 12 function as sub core and the metallic magnetic films 31, 32 function as main core. Thus, improvement in head output can be made.

At the buffing surface of the first and second magnetic core half bodies 11, 12, gap film (not shown in FIG. 7) consisting of non-magnetic material is interposed between the metallic magnetic films 31, 32 so that the magnetic gap 13 is formed. This magnetic gap 13 is provided so as to have azimuth angle of $+\theta°$. In this example, in the magnetic gap of the second magnetic unit 1b, there is provided azimuth angle $-\theta°$ which is opposite to that of the magnetic gap 13 of the first magnetic head unit 1a.

Meanwhile, in the first magnetic head unit 1a, as shown in FIG. 8, the first and second magnetic core half bodies 11, 12 are buff-bonded (joined) in the state positionally shifted in the direction where crosstalk noise which is signal except for tracking signal which is read out from adjacent recording track is decreased. The first magnetic core half body 11 and the second magnetic core half body 12 are bonded (joined) in the state positionally shifted in the extending direction of the magnetic gap 13 in such a manner that one end portion 11a of the first magnetic core half body 11 is protruded (projected) from the other end portion 12b of the second magnetic core half body 12 and one end portion 12a of the second magnetic core half body 12 is protruded (projected) from the other end portion 11b of the first magnetic core half body 11. Namely, the magnetic head unit 1a is caused to be of the structure in which the first magnetic core half body 11a is positionally shifted in the lower direction in FIG. 8 relative to the second core half body 12, and the previously described conventional second magnetic core half body 107 is boned (joined) in the state positionally shifted in direction opposite to that of the magnetic head unit 100 positionally shifted in the upper direction in FIG. 5 relative to the first magnetic core half body 106.

In such a case, first and second pseudo-gaps 13a, 13b are formed on intermediate line of angle $\alpha$ that one end portion 11a of the first magnetic core half body 11 and the other end portion 12b of the second magnetic core half body 12 form and on intermediate line of angle $\beta$ that one end portion 12a of the second magnetic core half body 12 and the other end portion 11b of the first magnetic core half body 11 form. These first and second pseudo-gaps 13a, 13b are formed in a manner inclined in a direction opposite to inclination direction of recording patterns of the - side recording tracks 4, 6. In the first and second pseudo-gaps 13a, 13b, because inclination direction is determined in a manner inclined in a direction opposite to azimuth angle of the - side recording tracks 4,6, crosstalk noise can be decreased by azimuth loss. Namely, inclination directions of respective pseudo-gaps 108, 109 of the previously described conventional magnetic head unit and inclination direction of recording pattern of the - side recording track 103 are substantially the same. On the contrary, with respect to first and second pseudo-gaps 13a, 13b formed at the magnetic head unit 1a according to this invention, since they are formed in the state inclined in a direction opposite to inclination direction of recording patterns of the - side recording tracks 4, 6. Thus, crosstalk noise can be decreased by azimuth loss.

The magnetic head unit 1a according to this invention operates as follows. Namely, when the magnetic tape 2 is traveled in the direction indicated by arrow a in FIG. 6, the rotary drum of the rotary magnetic head unit is rotationally operated. As a result, the magnetic tape 2 is scanned in the direction indicated by arrow b in FIG. 6 which is oblique relative to the traveling direction of the magnetic tape 2. Thus, magnetic field from the + side recording track 3 of the magnetic tape 2 is applied to the magnetic head unit 1a to thereby carry out read-out operation of information signals recorded on the + side recording track 3. Simultaneously therewith, since the magnetic head unit 1a is formed so as to slightly become broader than track width, crosstalk noise except for tracking signal is detected. Since inclination direction of the magnetic gap 13 is opposite to inclination direction of recording patterns of the - side recording tracks 4, 6, crosstalk noise detected at the overlap portions 33, 34 is attenuated by azimuth loss. In this case, the overlap portions 33, 34 detect tracking signal in addition to the above.

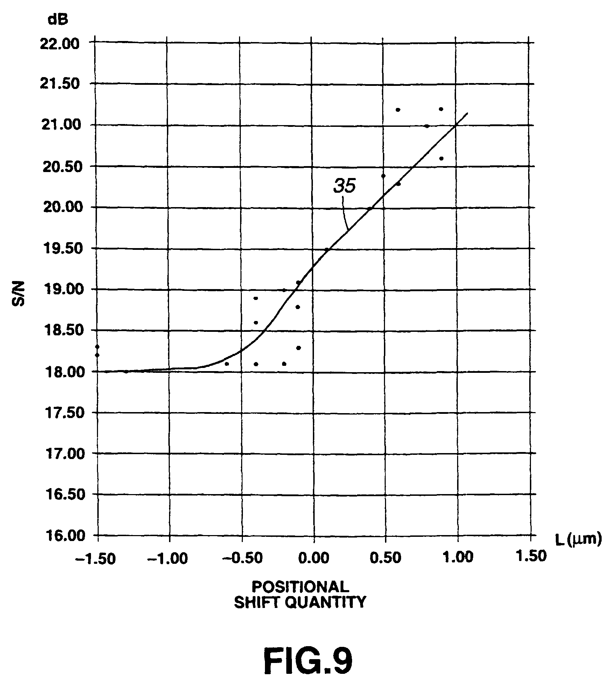

Further, the magnetic head unit 1a for reproduction is bonded (joined) in the state positionally shifted in such a manner that one end portion 11a of the first magnetic core half body 11 is protruded (projected) from the other end portion 12b of the second magnetic core half body 12 and one end portion 12a of the second magnetic core half body 12 is protruded (projected) from the other end portion 11b of the first magnetic core half body 11. For this reason, first and second pseudo-gaps 13a, 13b are formed in a manner inclined in a direction opposite to recording patterns of the - side recording tracks 4, 6. In the magnetic head unit 1a according to this invention, cross talk noise is detected also by first and second pseudo-gaps 13a, 13b. However, since the first and second pseudo-gaps 13a, 13b are formed in a manner inclined in a direction opposite to inclination direction of recording patterns of the - side recording tracks 4, 6, there is no possibility that azimuth loss becomes small, thus making it possible to reduce crosstalk noise. FIG. 9 shows a characteristic diagram showing signal-to-noise ratio (S/N) ratio with respect to positional shift quantity L of the first magnetic core half body 11 and the second magnetic core half body 12 shown in FIG. 8. In FIG. 9, positional shift quantity L of the abscissa is represented such that positional shift quantity L in the direction shown in FIG. 8 is expressed as +(plus) quantity and the previously described positional shift quantity L in the direction shown in FIG. 5 is expressed as -(minus) quantity. In addition, the S/N is expressed by the following formula.

S/N = (signal quantity from main recording track)/(crosstalk noise from adjacent recording track)

As shown in FIG. 9, line 35 indicates the characteristic that, with the fact that the positional shift quantity L is zero being as boundary, S/N is large at the + (plus) side and S/N is small at the - (minus) side. Thus, it is seen that in the case where the first and second magnetic core half bodies 11, 12 are positionally shifted in the direction shown in FIG. 8, S/N (signal-to-noise ratio) is large.

Accordingly, in accordance with the magnetic head unit 1a according to this invention, since the first and second magnetic core half bodies 11, 12 are as shown in FIG. 8 such that first and second pseudo-gaps 13a, 13b are formed in the state inclined in a direction opposite to azimuth angle of - side recording tracks 4, 6 adjacent to + side recording track 3, 5 for carrying out read-out operation of information signal, crosstalk noise can be reduced by azimuth loss.

It is to be noted that while explanation has been given by taking the example of magnetic head unit 1a for reproducing information signals recorded on the + side recording track 3, this invention can be applied as it is to second magnetic head unit 1b for reproduction shown in FIG. 6. In this case, a pair of magnetic core half bodies of the second magnetic head unit 1b are positionally shifted in a direction opposite to the direction where first and second magnetic core half bodies 11, 12 of the first magnetic head 1a shown in FIG. 8 are positionally shifted. Thus, since the second magnetic head unit 1b is adapted so that there are formed pseudo-gaps in a direction opposite to azimuth angle of the + side recording tracks 3, 5 adjacent to the - side recording tracks 4, 6, there is no possibility that azimuth loss becomes small, thus making it possible to reduce crosstalk noise.

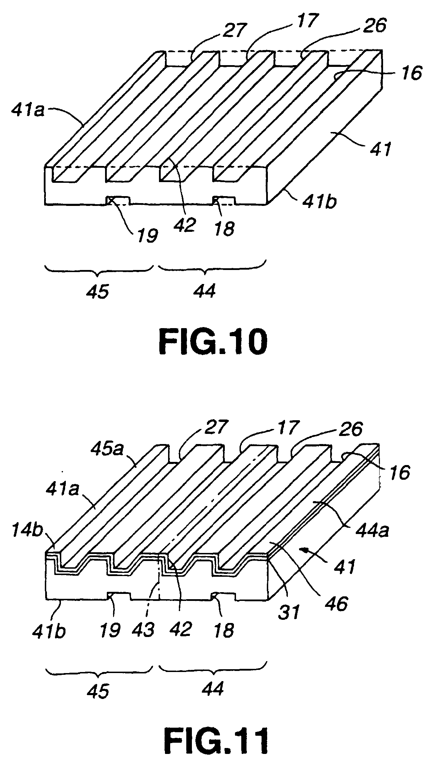

A method of manufacturing magnetic head 1a according to this invention will now be described with reference to FIGS. 10 to 13.

In order to manufacture the magnetic head unit 1a according to this invention, there is initially formed, as shown in FIG. 10, a flat plate shaped base (substrate) 41 for forming first and second magnetic core half bodies 11, 12. This base (substrate) 41 consists of magnetic material such as Mn-Zn ferrite or Ni ferrite, etc. Further, the base (substrate) 41 is caused to be of structure in which winding grooves 16, 17 for prescribing depth of the magnetic gap 13 and adapted so that coils are respectively engaged therewith and grooves 26, 27 into which bonding agent for bonding (joining) first and second magnetic core half bodies 11, 12 is filled are formed so that they are in parallel to each other on a principal surface 41 a serving as butting surface with respect to the other magnetic core half body. In addition, at a back face 41b opposite to the principal surface 41a of the base (substrate) 41, auxiliary winding grooves 18, 19 are formed in parallel in the areas opposite to the winding grooves 16, 17.

Thereafter, as shown in FIG. 11, metallic magnetic film 31 is formed on the principal surface 41a of the base (substrate) 41 by the sputtering method. As such metallic magnetic film 31, ferromagnetic material such as Fe system alloy or Fe-Ni system alloy, etc. is used. Moreover, on the upper layer of the metallic magnetic film 31, a gap film 46 consisting of non-magnetic material is formed. Further, the base (substrate) 41 is sliced at line 43 of a convex portion 42 between the groove 26 and the winding groove 17 so that it is bisected. As the result of the fact that the base (substrate) 41 is bisected, there are formed first and second core half body blocks 44, 45 corresponding to the first magnetic core half body 11 and the second magnetic core half body 12.

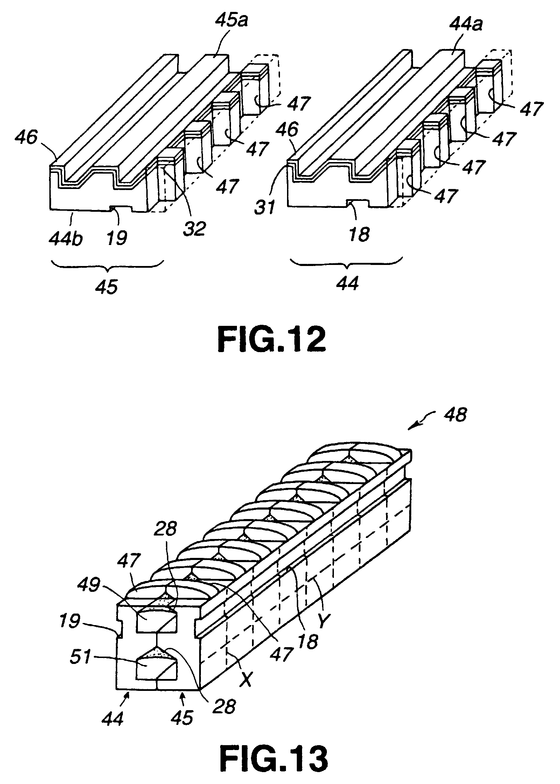

Thereafter, at the first and second core half body blocks 44, 45 on which metallic magnetic film 31 is formed, as shown in FIG. 12, groove portions 47 constituting the above-described offsets 29, 29, 30, 30 are formed on buffing surfaces 44a, 45a in a direction substantially perpendicular to the direction where winding grooves 16, 17 and grooves 26, 27 are formed. Namely, these groove portions 47 are provided in a manner inclined in correspondence with azimuth angle of the magnetic gap 13 which is inclination angle with respect to width direction of recording tracks of the magnetic tape 2. At this time, the areas where the groove portions 47 are not provided serve as slidable contact surfaces 25 slidably in contact with the magnetic tape 2, and such slidable contact surfaces 25 are provided so as to slightly become broader than track width of recording tracks of the magnetic tape 2.

As stated above, first and second core half body blocks 44, 45 at which groove portions 47 are formed are bonded (joined) in the state where first and second butting surfaces 44a, 45a are opposite as shown in FIG. 13. In more practical sense, a core block 48 constituted by buffing first and second core half body blocks 44, 45 is formed by inserting glass rod serving as bonding agent 28 into an opening portion 49 constituted by winding grooves 16, 17 and an opening portion 51 constituted by grooves 26, 27 to melt (fuse) this glass rod so that the first and second core half body blocks 44, 45 are bonded (joined). Thus, bonding agent 28 is filled with respect to the upper side in FIG. 13 of the opening portions 49, 51. At this time, the first and second core half body blocks 44, 45 are butt-bonded (joined) in the state positionally shifted in a direction where crosstalk noise is reduced as shown in the above-mentioned FIG. 8.

Thereafter, as shown in FIG. 13, the core block 48 is ground so that the areas where groove portions 47 are not provided serving as slidable contact surface 25 with respect to the magnetic tape take circular arc shape. Further, the core block 48 is sliced in the direction indicated by doffed lines X in FIG. 13 at the groove portions 47 and is sliced in the direction indicated by doffed lines Y in FIG. 13. When the core block 48 is sliced in the direction indicated by doffed lines X in FIG. 13, such slice is carried out in the state inclined in correspondence with azimuth angle. Thereafter, coils 23, 24 are wound on winding portions 21, 22 constituted by winding grooves 16, 17 and auxiliary winding grooves 18, 19. Thus, the magnetic head unit 1a according to this invention is completed.

In accordance with such a manufacturing method, magnetic head unit 1a in which first and second magnetic core half bodies 11, 12 are positionally shifted in the direction where crosstalk noise is decreased can be manufactured. Moreover, in accordance with the manufacturing method according to this invention, since groove portions 47 are provided before first and second core half body blocks 44, 45 are bonded (joined) and there is no cutting process after the first and second core half body blocks 44, 45 are bonded (joined), the magnetic head 1a can be manufactured with high accuracy. In addition, by using the manufacturing method according to this invention, the first and second magnetic core half bodies 11, 12 can be bonded (joined) in the state positionally shifted in a direction where crosstalk noise is decreased. For this reason, manufacturing of the magnetic head unit 1a can be easily carried out as compared to the case where the magnetic core half bodies 11, 12 are bonded (joined) in the state where they are not positionally shifted.

Industrial Applicability

The magnetic head device according to this invention and the magnetic head device manufactured by the method of this invention are adapted so that buffing direction of magnetic core half bodies which are butted each other to form magnetic gap is positionally shifted in a direction where crosstalk noise which is read out from adjacent recording track is decreased, and there are formed pseudo-gaps inclined in a direction opposite to azimuth angle of the adjacent recording track. Thus, crosstalk noise can be reduced.

In addition, the magnetic head device according to this invention and the magnetic head device manufactured by the method of this invention are formed in the state where magnetic core half bodies are positionally shifted. For this reason, the magnetic core half bodies can be more easily bonded (joined) as compared to the case where the magnetic core half bodies are bonded (joined) so that positional shift therebetween does not take place. Particularly, also in the case where width of recording track is narrowed so that high density can be realized, this invention can reduce crosstalk noise.

**Claims**

1.  A magnetic head device adapted for carrying out read-out operation of information signals recorded on a magnetic recording medium where recording of information signals has been carried out with respect to recording tracks adjacent to each other,
    wherein magnetic core half bodies opposite to each other to form magnetic gap are joined in the state where they are positionally shifted so as to take positional relationship to decrease crosstalk noise which is read out from the adjacent recording track.

2.  A magnetic head device as set forth in claim 1,
    wherein end portion of one magnetic core half body is projected toward both ends of the magnetic gap.

3.  A magnetic head device as set forth in claim 1,
    wherein the magnetic core half bodies are joined so that inclination direction of pseudo-gap taking place by positional shift of the magnetic gap is formed in a manner inclined in a direction opposite to recording pattern of the adjacent recording track.

4.  A method of manufacturing a magnetic head device for carrying out read-out operation of information signals recorded on a magnetic recording medium where recording of information signals has been carried out with respect to recording tracks adjacent to each other,
    wherein a pair of magnetic core half bodies are joined in a manner positionally shifted to each other so as to take positional relationship to decrease crosstalk noise which is read out from the adjacent recording track..

**FIG.1**

**FIG.2**

FIG.3

**FIG.4**

**FIG.5**

FIG.6

EP 0 997 872 A1

**FIG.7**

**FIG.8**

FIG.9

**FIG.10**

**FIG.11**

**FIG.12**

**FIG.13**

# INTERNATIONAL SEARCH REPORT

| | International application No. |
|---|---|
| | PCT/JP99/02536 |

| A. CLASSIFICATION OF SUBJECT MATTER |
|---|
| Int.Cl⁶ G11B5/23, G11B5/127 |

According to International Patent Classification (IPC) or to both national classification and IPC

| B. FIELDS SEARCHED |
|---|
| Minimum documentation searched (classification system followed by classification symbols) |
| Int.Cl⁶ G11B5/127-5/255 |

Documentation searched other than minimum documentation to the extent that such documents are included in the fields searched

| Jitsuyo Shinan Koho | 1922-1996 | Toroku Jitsuyo Shinan Koho | 1994-1999 |
|---|---|---|---|
| Kokai Jitsuyo Shinan Koho | 1971-1999 | Jitsuyo Shinan Toroku Koho | 1996-1999 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP, 10-003608, A (Sony Corp.),<br>6 January, 1998 (06. 01. 98),<br>Full text ; Fig. 2 (Family: none) | 1-4 |
| X | JP, 10-003607, A (Sony Corp.),<br>6 January, 1998 (06. 01. 98),<br>Full text ; Fig. 2 (Family: none) | 1-4 |
| X | JP, 10-003606, A (Sony Corp.),<br>6 January, 1998 (06. 01. 98),<br>Full text ; Fig. 2 (Family: none) | 1-4 |
| X | JP, 10-003605, A (Sony Corp.),<br>6 January, 1998 (06. 01. 98),<br>Full text ; Fig. 2 (Family: none) | 1-4 |
| E, A | JP, 10-302211, A (Sony Corp.),<br>13 November, 1998 (13. 11. 98),<br>Full text ; Fig. 25 (Family: none) | 1-4 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| 7 June, 1999 (07. 06. 99) | 22 June, 1999 (22. 06. 99) |

| Name and mailing address of the ISA/<br>Japanese Patent Office | Authorized officer |
|---|---|
| Facsimile No. | Telephone No. |

Form PCT/ISA/210 (second sheet) (July 1992)